# EUROPEAN PATENT SPECIFICATION

(11) **EP 3 572 338 B1**
(45) Date of publication and mention of the grant of the patent: **05.07.2023**
(21) Application number: 18877308.9
(22) Date of filing: 31.05.2018
(51) Int. Cl.: B29D 30/50, B65B 11/04, B65B 41/16, B65B 51/06, B65B 59/00

(54) **WRAPPING DEVICE AND METHOD FOR WRAPPING A TIRE BEAD WIRE**
WICKELVORRICHTUNG UND VERFAHREN ZUM EINWICKELN EINES REIFENWULSTKERNS
DISPOSITIF ET PROCÉDÉ D'EMBALLAGE DE TRINGLE DE PNEU

(30) Priority: 28.03.2018 CN 201810265621
(43) Date of publication of application: 27.11.2019
(73) Proprietor: Shandong Daye Co., Ltd., Zhucheng, Shandong 262218 (CN)
(72) Inventor: LI, Wenjun, Zhucheng, Shandong 262218 (CN)
(74) Representative: Gille Hrabal Partnerschaftsgesellschaft mbB Patentanwälte
(86) International application number: PCT/CN2018/089121
(87) International publication number: WO 2019/184081

(56) References cited:
- CN-A- 103 043 238
- CN-A- 106 144 704
- CN-A- 106 697 366
- CN-U- 203 032 955
- CN-U- 203 958 661
- CN-U- 205 574 331
- CN-U- 206 954 594
- JP-B2- 2 886 080
- US-A- 1 635 187
- US-A1- 2012 219 745

## Description

### Technical Field

The present invention relates to the field of film wrapping devices, specifically to a film wrapping device and a film wrapping method for tire bead wire.

### Background

As an important part of tires, tire bead wires are usually produced and supplied to tire manufacturers by tire bead wire manufacturers. In order to prevent the tire bead wires from being oxidized, the tire bead wires need strict sealing and packaging after delivery. If they are exposed to the air, they will be oxidized, discoloured and rusted, etc., with the properties such as tensile strength and torsion reduced, thereby causing the wires to bond to rubber, decreasing the rubber adhesion ratio of the wires and affecting the quality of the wires. At present, using an H-shaped spool for tire bead wire packaging has become a trend. However, this work mainly depends on manual labour, which results in poor quality and inefficiency of tire bead wire packaging. Therefore, it has become a common requirement for the industry to develop a special H-shaped spool tire bead wire packaging device.

CN203032955U discloses a tire bead steel wire packing machine. The tire bead steel wire packing machine is characterized in that ejector pins are arranged on two sides of a support respectively, one ejector pin is provided with a cylinder, the other ejector pin is connected with a transmission mechanism, a preservative film roller is arranged at the top end of the support, and an adhesive tape roller is arranged below the preservative film roller. The tire bead steel wire packing machine can be used for sealed packing of a tire bead steel wire wound on an I-shaped wheel, prevents the steel wire from oxidation and rusting, and improves quality of the steel wire.

CN106697366A discloses a glass fiber yarn roll membrane coating machine, and belongs to the technical field of glass fiber production equipment. The glass fiber yarn roll membrane coating machine is good in coating effect and high in membrane coating efficiency. The glass fiber yarn roll membrane coating machine comprises a conveying device used for conveying yarn rolls and preventing scattered yarns of the yarn rolls from getting stuck, clamping turnover devices used for grabbing, overturning, lifting and rotating the yarn rolls, a membrane conveying device used for placing coating membranes, attaching the coating membranes onto the yarn rolls and cutting off the coating membranes, a membrane pressing device used for tightly pressing the yarn rolls, membrane pushing devices used for pushing level the coating membranes exceeding the end faces of the yarn rolls onto the end faces of the yarn rolls, and a control system used for controlling the clamping turnover devices, the membrane conveying device, the membrane pressing device and the membrane pushing devices to achieve linkage. The glass fiber yarn roll membrane coating machine is suitable for a membrane coating machine coating a layer of membrane outside glass fiber yarn rolls.

### Summary

In view of the defects existing in the prior art, the present invention aims to provide a film wrapping device according to claim 1 and a film wrapping method for tire bead wire according to claim 13, which raise the bead wire packaging efficiency and improve the bead wire packaging quality. Preferred embodiments are described in the dependent claims.

A film wrapping device for tire bead wire comprises a machine frame body; the machine frame body is provided with:
a winding unit, comprising a first winding shaft and a second winding shaft;
an H-shaped spool assembly, comprising an H-shaped spool and a drive unit for driving the H-shaped spool to rotate;
a film cutting mechanism, configured to cut off a film material directly or indirectly conveyed by the winding unit;
a film guiding mechanism, comprising a motion mechanism, wherein the motion mechanism is configured to be adapted to reciprocate in a first direction and a second direction; the first direction is a direction close to and away from the H-shaped spool, while the second direction is a perpendicular direction; the motion mechanism is provided with an adsorption assembly and a pressing assembly; the adsorption assembly is configured to hold the film material by means of negative pressure, and to convey, under the action of the motion mechanism, an end of the cut film material to the H-shaped spool; the pressing assembly is configured to move to the H-shaped spool under the action of the motion mechanism and press the film material; and
a glue rubber strip applying unit, configured to paste a gule rubber strip to the film material on the H-shaped spool.

The film wrapping device of the present invention has the advantages of simple structure, easy operation, automatic wrapping, reduced manual labour, raised tire bead wire packaging efficiency and improved tire bead wire packaging quality.

Based on the above technical solution, the motion mechanism comprises a crossed sliding table slide rest, which is disposed along the
second direction, with the bottom connected to the machine frame body; and
a guide rail, which is connected to the crossed sliding table slide rest, disposed along the first direction, and provided with a sliding block. The sliding block is capable of sliding in the first direction and the second direction to adjust the relative position between the motion mechanism and the H-shaped spool.

Based on the above technical solution, the adsorption assembly and the pressing assembly are connected through a connecting rod; the connecting rod is disposed on the guide rail in a sliding manner; and the connecting rod is connected to the sliding block. The sliding block moves to drive the connecting rod to move, so as to drive the adsorption assembly and the pressing assembly to move, thereby guaranteeing that the adsorption assembly holds the film material by means of negative pressure and to convey an end of the film material to the H-shaped spool under the action of the motion mechanism, and making sure that the pressing assembly moves to the H-shaped spool under the action of the motion mechanism and presses the film material.

Based on the above technical solution, the film cutting mechanism comprises a pneumatic film cutter, which is disposed inside the film cutting mechanism; and
a film bucket, fixed on the upper part of the pneumatic film cutter, and comprising two film feeding ports, which are respectively matched with the first winding shaft and the second winding shaft. The film material wound on the first winding shaft and the second winding shaft enters the film cutting mechanism respectively through the two film feeding ports; the pneumatic film cutter is configured to cut off the film material in the film feeding ports.

Based on the above technical solution, the drive unit is provided with a film pressing mechanism; the film pressing mechanism is driven by the drive unit to synchronously rotate with the H-shaped spool.

Based on the above technical solution, the film pressing mechanism comprises:
a film pressing rod, the one end of which is connected to the drive unit; and
a pressing head, connected to the other end of the film pressing rod, and configured to press the film material onto the H-shaped spool. The pressing head presses the film material conveyed by the film bucket onto the H-shaped spool; driven by the drive unit, the film pressing mechanism synchronously rotates with the H-shaped spool to wind the film materials on the H-shaped spool, thereby wrapping tire bead wire on the H-shaped spool with film.

Based on the above technical solution, the glue rubber strip applying unit comprises:
a material tray, disposed on one side of the glue rubber strip applying unit, and configured to wind rubber strip coil stock for sizing;
a recycling winding tray, disposed at the bottom of the glue rubber strip applying unit, and configured to wind a used rubber strip raw material for recycling;
a Z-axis direction adjusting hand crank, disposed at the top of the glue rubber strip applying unit, and configured to adjust the glue rubber strip applying unit to move close to and away from the H-shaped spool in a vertical direction;
an X-axis direction adjusting hand crank, perpendicular to the Z-axis direction adjusting hand crank, and configured to adjust the movement of the glue rubber strip applying unit along the axial direction of the H-shaped spool, so that after the adjustment in the Z-axis direction and X-axis direction, the glue rubber strip applying unit exactly applies the glue rubber strip to the film material on the H-shaped spool;
a glue rubber strip pressing rod, disposed on the other side of the glue rubber strip applying unit relative to the material tray, and provided with a glue rubber strip stripping board at the bottom, wherein the glue rubber strip stripping board pastes the glue rubber strip to the film material on the H-shaped spool under the action of the glue rubber strip pressing rod; the glue rubber strip pressing rod moves downwards, thereby driving the glue rubber strip stripping board to paste the glue rubber strip to the film material on the H-shaped spool; and
a pulling mechanism, disposed between the glue rubber strip pressing rod and the recycling winding tray, and configured to pull the glue rubber strip raw material to the recycling winding tray. The glue rubber strip raw material is recycled to save the material cost.

Based on the above technical solution, the machine frame body is provided with at least one deviation correction system; the deviation correction system comprises a deviation correction sensor, which is configured to detect the position of the film material directly or indirectly conveyed by the winding unit; and
a deviation correction drive unit, which is connected to the deviation correction sensor, and configured to drive the film material to move along the width direction of the film material. The deviation correction system solves the problem that the film material is easy to deviate during the conveying process, with high control precision, and guarantees that the wound film material is firm and is not easy to loosen.

Based on the above technical solution, the machine frame body is provided with two deviation correction systems; the two deviation correction systems are respectively matched with the first winding shaft and the second winding shaft; the two deviation correction systems are disposed at intervals along the height direction of the machine frame body. As each winding shaft is corresponding to a deviation correction system, the film materials used for tire bead wire wrapping both are corrected, thus further making sure that the different film materials are not easy to loosen after wrapping (packaging) the tire bead wire, and guaranteeing the packaging quality and precision.

Based on the above technical solution, two film guide roll sets are disposed between the deviation correction systems and the winding unit; the two film guide roll sets are respectively matched with the first winding shaft and the second winding shaft; the two film guide roll sets are disposed at intervals along the height direction of the machine frame body. A film guide roll set is correspondingly disposed between each winding shaft and the deviation correction system; the two film guide roll sets may respectively convey the film materials on the first winding shaft and the second winding shaft to the corresponding deviation correction systems; the two film guide roll sets do not interfere with each other.

Based on the above technical solution, each deviation correction system is connected with a film feeding roll set; the film feeding roll sets are disposed at intervals along the height direction of the machine frame body; the film feeding roll sets are configured to convey the film materials sent by the deviation correction systems to the film cutting mechanism. The film feeding roll sets are connected to the deviation correction systems, and respectively feed the corrected film materials to the two film feeding ports of the film cutting mechanism; the two film materials are separated and do not interfere with each other.

A film wrapping device for tire bead wire, comprising a machine frame body; the machine frame body is provided with:
a winding unit, disposed at one end of the machine frame body, and comprising a first winding shaft and a second winding shaft, which are disposed side by side at intervals;
a glue rubber strip applying unit, disposed at the other end of the machine frame body relative to the winding unit;
an H-shaped spool assembly, disposed under the glue rubber strip applying unit, and comprising an H-shaped spool and a drive unit for driving the H-shaped spool to rotate;
a film cutting mechanism, disposed obliquely below the winding unit and close to the H-shaped spool assembly; and
a film guiding mechanism, of which the top is connected to the film cutting mechanism and the bottom is connected to the bottom of the machine frame body, and comprising a motion mechanism, wherein the top of the motion mechanism is connected to the film cutting mechanism, and the motion mechanism is provided with an adsorption assembly and a pressing assembly.

The film wrapping device for tire bead wire of the present invention is used for tire bead wire wrapping so as to raise the tire bead wire packaging efficiency and improve the tire bead wire packaging quality.

A film wrapping method for tire bead wire performs tire bead wire wrapping with a film material using the above film wrapping device for tire bead wire. The whole tire bead wire film wrapping method has simple process, high precision and high efficiency; the tire bead wire film packaging quality is improved, the wound film materials are firm and are not easy to loosen after packaging, and the tire bead wire may be wrapped by two film materials, which do not interfere with each other during the packaging process; and the working process is rapid and efficient, automatic operation is realized, and manual labour is saved.

Compared with the prior art, the present invention has the following advantages:
(1) the tire bead wire film wrapping device of the present invention includes a machine frame body; the machine frame body is provided with a winding unit, an H-shaped spool assembly, a film cutting mechanism, a film guiding mechanism and a rubber applying mechanism; the winding unit includes a first winding shaft and a second winding shaft, which respectively wind two different film materials; the H-shaped spool assembly includes an H-shaped spool for winding tire bead wire and a drive unit for driving the H-shaped spool to rotate; the film cutting mechanism is configured to cut off the film material directly or indirectly conveyed by the winding unit; the film guiding mechanism includes a motion mechanism; the motion mechanism is capable of moving close to and away from the H-shaped spool, or moving in a perpendicular direction; the motion mechanism is provided with an adsorption assembly and a pressing assembly; the adsorption assembly is configured to hold the film material by means of negative pressure and to convey an end of the cut film material to the H-shaped spool under the action of the motion mechanism; the pressing assembly is configured to move to the H-shaped spool under the action of the motion mechanism and press the film material; the rubber applying mechanism is configured to paste a glue rubber strip to the film material on the H-shaped spool; the tire bead wire film wrapping device of the present invention is configured to package the tire bead wire so as to raise the tire bead wire packaging efficiency and improve the tire bead wire packaging quality; and
(2) the machine frame body of the tire bead wire film wrapping device of the present invention is provided with a deviation correction system, which solves the problem that the film materials are easy to deviate in the conveying process, with high control precision, and guarantees that the wound film materials are firm and are not easy to loosen.

### Brief Description of the Drawings

FIG. 1 is a three-dimensional structural schematic diagram of a tire bead wire film wrapping device according to an embodiment of the present invention; and
FIG. 2 is a front view of a tire bead wire film wrapping device according to an embodiment of the present invention.

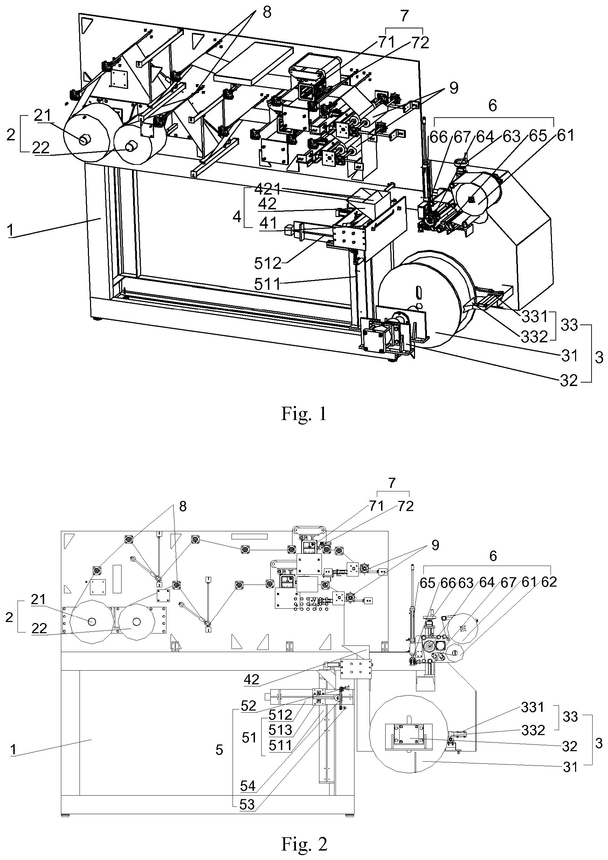

In figure 1: 1-machine frame body, 2-winding unit, 21-first winding shaft, 22-second winding shaft, 3-H-shaped spool assembly, 31-H-shaped spool, 32-drive unit, 33-film pressing mechanism, 331-film pressing rod, 332-pressing head, 4-film cutting mechanism, 41-pneumatic film cutter, 42-film bucket, 421-film feeding port, 5-film guiding mechanism, 51-movable mechanism, 511-crossed sliding table slide rest, 512-guide rail, 513-sliding block, 52-adsorption assembly, 53-pressing assembly, 54-connecting rod, 6-glue rubber strip applying unit, 61-material tray, 62-recycling winding tray, 63-Z-axis direction adjusting hand crank, 64-X-axis direction adjusting hand crank, 65-glue rubber strip pressing rod, 66-glue rubber strip stripping board, 67-pulling mechanism, 7-deviation correction system, 71-deviation correction sensor, 72-deviation correction drive unit, 8-film guide roll set, 9-film feeding roll set;

In figure 2: 1: machine frame body; 2: winding unit; 21: first winding shaft; 22: second winding shaft; 3: H-shaped spool assembly; 31: H-shaped spool; 32: drive unit; 33: film pressing mechanism; 331: film pressing rod; 332, pressing head; 4: film cutting mechanism; 41: pneumatic film cutter; 42: film bucket; 421: film feeding port; 5: film guiding mechanism; 51: motion mechanism; 511: crossed sliding table slide rest; 512: guide rail; 513: sliding block; 52: adsorption assembly; 53: pressing assembly; 54: connecting rod; 6: glue rubber strip applying unit; 61: material tray; 62: recycling winding tray; 63: Z-axis direction adjusting hand crank; 64: X-axis direction adjusting hand crank; 65: glue rubber strip pressing rod; 66: glue rubber strip stripping board; 67: pulling mechanism; 7: deviation correction system; 71: deviation correction sensor; 72: deviation correction drive unit; 8: film guide roll set; 9: film feeding roll set.

### Detailed Description of the Embodiments

The present invention is further described below with reference to the drawings and embodiments in detail.

Referring to FIG. 1 and FIG. 2, an embodiment of the present invention provides a tire bead wire film wrapping device. The tire bead wire film wrapping device includes a machine frame body 1; the machine frame body 1 is provided with: a winding unit 2, including a first winding shaft 21 and a second winding shaft 22, which respectively wind different film materials for two-layer wrapping (packaging) of the tire bead wire; an H-shaped spool assembly 3, including an H-shaped spool 31 and a drive unit 32 for driving the H-shaped spool 31 to rotate, the tire bead wire is wound on the H-shaped spool 31; a film cutting mechanism 4, configured to cut off the film materials directly or indirectly conveyed by the winding unit 2; a film guiding mechanism 5, including a motion mechanism 51, wherein the motion mechanism 51 is configured to be adapted to reciprocate in a first direction and a second direction; the first direction is a direction close to and away from the H-shaped spool 31; in the present embodiment, the first direction is a horizontal direction; the second direction is a perpendicular direction; in the present embodiment, the second direction is a vertical direction; the motion mechanism 51 is provided with an adsorption assembly 52 and a pressing assembly 53; the adsorption assembly 52 is configured to hold the film materials by means of negative pressure and to convey an end of the cut film materials to the H-shaped spool 31 under the action of the motion mechanism 51; the pressing assembly 53 is configured to move to the H-shaped spool 31 under the action of the motion mechanism 51 and press the film materials; and a glue rubber strip applying unit 6, configured to paste a glue rubber strip to the film material on the H-shaped spool 31. The tire bead wire wrapping device of the embodiment of the present invention has the advantages of simple structure, easy operation, automatic wrapping, reduced manual labour, raised tire bead wire packaging efficiency and improved tire bead wire packaging quality.

The motion mechanism 51 includes a crossed sliding table slide rest 511, which is disposed along the second direction, with the bottom connected to the machine frame body 1; and a guide rail 512, which is connected to the crossed sliding table slide rest 511, disposed along the first direction, and provided with a sliding block 513. The sliding block 513 is capable of sliding in the first direction and the second direction to adjust the relative position between the motion mechanism 51 and the H-shaped spool 31.

The adsorption assembly 52 and the pressing assembly 53 are connected through a connecting rod 54; the connecting rod 54 is disposed on the guide rail 512 in a sliding manner; the connecting rod 54 is connected to the sliding block 513. The sliding block 513 moves to drive the connecting rod 54 to move, so as to drive the adsorption assembly 52 and the pressing assembly 53 to move, thereby making sure that the adsorption assembly 52 holds the film materials by means of negative pressure and to convey an end of the cut film materials to the H-shaped spool 31 under the action of the motion mechanism 51, and guaranteeing that the pressing assembly 53 moves to the H-shaped spool 31 under the action of the motion mechanism 51 and presses the film materials.

The film cutting mechanism 4 includes a pneumatic film cutter 41, which is disposed inside the film cutting mechanism 4; and a film bucket 42, fixed on the upper part of the pneumatic film cutter 41, and including two film feeding ports 421, which are respectively matched with the first winding shaft 21 and the second winding shaft 22. The film materials wound on the first winding shaft 21 and the second winding shaft 22 enter the film cutting mechanism 4 respectively through the two film feeding ports 421; the pneumatic film cutter 41 is configured to cut off the film materials in the film feeding ports 421.

In the embodiment of the present invention, the drive unit 32 is provided with a film pressing mechanism 33; the film pressing mechanism 33 is driven by the drive unit 32 to synchronously rotate with the H-shaped spool 31. The film pressing mechanism 33 includes: a film pressing rod 331, the one end of which is connected to the drive unit 32; and a pressing head 332, connected to the other end of the film pressing rod 331, and configured to press the film materials onto the H-shaped spool 31. The pressing head 332 presses the film materials conveyed by the film bucket 42 onto the H-shaped spool 31; driven by the drive unit 32, the film pressing mechanism 33 synchronously rotates with the H-shaped spool to wind the film materials on the H-shaped spool 31, thereby wrapping (packaging) the tire bead wire with film on the H-shaped spool 31.

The glue rubber strip applying unit 6 includes: a material tray 61, disposed on one side of the glue rubber strip applying unit 6, and configured to wind a glue rubber strip raw material for sizing; a recycling winding tray 62, disposed at the bottom of the glue rubber strip applying unit 6, and configured to wind a used glue rubber strip raw material for recycling; a Z-axis direction adjusting hand crank 63, disposed at the top of the glue rubber strip applying unit 6, and configured to adjust the glue rubber strip applying unit 6 to move close to and away from the H-shaped spool 31 in a vertical direction; an X-axis direction adjusting hand crank 64, perpendicular to the Z-axis direction adjusting hand crank 63, and configured to adjust the movement of the glue rubber strip applying unit 6 along the axial direction of the H-shaped spool 31, so that after the adjustment, the glue rubber strip applying unit 6 exactly applies the glue rubber strip to the film materials on the H-shaped spool 31; a glue rubber strip pressing rod 65, disposed on the other side of the glue rubber strip applying unit 6 relative to the material tray 61, and provided with a glue rubber strip stripping board 66 at the bottom, wherein the glue rubber strip stripping board 66 pastes the glue rubber strip to the film materials on the H-shaped spool 31 under the action of the glue rubber strip pressing rod 65; the glue rubber strip pressing rod 65 moves downwards, thereby driving the glue rubber strip stripping board 66 to paste the glue rubber strip to the film materials on the H-shaped spool 31; and a pulling mechanism 67, disposed between the glue rubber strip pressing rod 65 and the recycling winding tray 62, and configured to pull the glue rubber strip raw material to the recycling winding tray 62. The glue rubber strip raw material is recycled to save the material cost.

In the embodiment of the present invention, the machine frame body 1 is provided with at least one deviation correction system 7; the deviation correction system 7 includes a deviation correction sensor 71, which is configured to detect the position of the film materials directly or indirectly conveyed by the winding unit 2; and a deviation correction drive unit 72, which is connected to the deviation correction sensor 71, and configured to drive the film materials to move along the width direction of the film materials. The deviation correction system solves the problem that the film materials are easy to deviate in the conveying process, with high control precision, and guarantees that the wound film materials are firm and are not easy to loosen.

The machine frame body 1 is provided with two deviation correction systems 7; the two deviation correction systems 7 are respectively matched with the first winding shaft 21 and the second winding shaft 22; the two deviation correction systems 7 are disposed at intervals along the height direction of the machine frame body 1. As each winding shaft is corresponding to a deviation correction system 7, the film materials used for tire bead wire wrapping both are corrected, thus further making sure that different film materials are not easy to loosen after wrapping (packaging) the tire bead wire, and guaranteeing the packaging quality and precision.

Two film guide roll sets 8 are disposed between the deviation correction systems 7 and the winding unit 2; the two film guide roll sets 8 are respectively matched with the first winding shaft 21 and the second winding shaft 22; the two film guide roll sets 8 are disposed at intervals along the height direction of the machine frame body 1. A film guide roll set 8 is correspondingly disposed between each winding shaft and the deviation correction system 7; the two film guide roll sets 8 may respectively convey the film materials on the first winding shaft 21 and the second winding shaft 22 to the corresponding deviation correction systems 7; the two film guide roll sets 8 do not interfere with each other.

Each deviation correction system 7 is connected with a film feeding roll set 9; the paper feeding roll sets 9 are disposed at intervals along the height direction of the machine frame body 1; the film feeding roll sets 9 are configured to convey the film materials sent by the deviation correction systems 7 to the film cutting mechanism 4. The film feeding roll sets 9 are connected to the deviation correction systems 7, and respectively feed the corrected film materials to the two film feeding ports 421 of the film cutting mechanism 4; the two film materials are separated and do not interfere with each other.

An embodiment of the present invention provides a tire bead wire film wrapping device. Preferably, the tire bead wire film wrapping device includes a machine frame body 1; the machine frame body 1 is provided with: a winding unit 2, disposed at one end of the machine frame body 1, and including a first winding shaft 21 and a second winding shaft 22, wherein the first winding shaft 21 and the second winding shaft 22 respectively wind different film materials for two-layer wrapping (packaging) of the tire bead wire, the first winding shaft 21 and the second winding shaft 22 are disposed side by side at intervals, and the two film materials are separated and do not interfere with each other in the conveying process; a glue rubber strip applying unit 6, disposed at the other end of the machine frame body 1 relative to the winding unit 2, and configured to paste a glue rubber strip to the film materials on the H-shaped spool 31; an H-shaped spool assembly 3, disposed under the glue rubber strip applying unit 6 to facilitate the glue rubber strip applying of the glue rubber strip applying unit 6 on the H-shaped spool 31, and including an H-shaped spool 31 and a drive unit 32 for driving the H-shaped spool 31 to rotate; a film cutting mechanism 4, disposed obliquely below the winding unit 2 and close to the H-shaped spool assembly 3, and configured to cut off the film materials directly or indirectly conveyed by the winding unit 2; a film guiding mechanism 5, of which the top is connected to the film cutting mechanism 4 and the bottom is connected to the bottom of the machine frame body 1, and including a motion mechanism 51, wherein the top of the motion mechanism 51 is connected to the film cutting mechanism 4, and the motion mechanism 51 is capable of moving close to and away from the H-shaped spool; in the embodiment of the present invention, the motion mechanism 51 moves in a horizontal direction or a perpendicular direction; in the embodiment of the present invention, the motion mechanism 51 moves in a vertical direction; the motion mechanism 51 is provided with an adsorption assembly 52 and a pressing assembly 53; the adsorption assembly 52 is configured to hold the film materials by means of negative pressure and to convey the end of the cut film materials to the H-shaped spool 31 under the action of the motion mechanism 51; the pressing assembly 53 is configured to move to the H-shaped spool 31 under the action of the motion mechanism 51 and press the film materials. The tire bead wire wrapping device of the present invention is used for tire bead wire wrapping (packaging) so as to raise the tire bead wire packaging efficiency and improve the tire bead wire packaging quality.

An embodiment of the present invention provides a tire bead wire film wrapping method, performing tire bead wire wrapping with film material using the above tire bead wire film wrapping device, including the following steps:
S1. the first winding shaft 21 and the second winding shaft 22 respectively wind two different film materials; the film guide roll set 8 corresponding to the first winding shaft 21 conveys one film material to the deviation correction system 7 corresponding to the first winding shaft 21, and the film guide roll set 8 corresponding to the second winding shaft 22 conveys the other film material to the deviation correction system 7 corresponding to the second winding shaft 22; a film guide roll set 8 is correspondingly disposed between each winding shaft and the deviation correction system 7; the two film guide roll sets 8 can respectively convey the film materials on the first winding shaft 21 and the second winding shaft 22 to the corresponding deviation correction systems 7; the two film guide roll sets 8 do not interfere with each other;
S2. the two deviation correction systems 7 respectively acquire the deviation directions of the two corresponding film materials and output corresponding deviation signals to the corresponding deviation correction sensors 71; according to the deviation signals of the deviation correction sensors 71, the corresponding deviation correction drive units 72 are controlled to act, thereby driving the film materials to move along the width direction of the film materials for correction; as each winding shaft is respectively corresponding to a deviation correction system 7, the two film materials both are corrected, thus further making sure that the different film materials are not easy to loosen after wrapping the tire bead wire, and guaranteeing the wrapping (packaging) quality and precision;
S3. the two corrected film materials are conveyed to the film feeding roll sets 9 connected to the deviation correction systems 7; the corresponding film feeding roll sets 9 respectively convey the two film materials to the film cutting mechanism 4 below; the two film materials enter the film cutting mechanism 4 through the two film feeding ports 421, wherein a film material is firstly conveyed from below the film cutting mechanism 4 to the external circular surface of the H-shaped spool 31, and is firstly used to wrap (package) the H-shaped spool 31; the other film material enters a film feeding port 421 for further use; the two film materials do not interfere with each other, thereby guaranteeing the working efficiency and wrapping (packaging) quality;
S4. the drive unit 32 is started to drive the film pressing mechanism 33 to work; the film pressing rod 331 drives the pressing head 332 to press the film material on the external circular surface of the H-shaped spool 31 onto the surface of the tire bead wire on the H-shaped spool 31; the film pressing mechanism 33 and the H-shaped spool 31 are driven by the drive unit 32 to synchronously rotate to wind the film material onto the surface of the tire bead wire on the H-shaped spool 31; the pressing head 332 helps the H-shaped spool 31 attach the film material to the H-shaped spool 31, thereby making sure that the film material is not easy to fall off the H-shaped spool 31, and guaranteeing smooth wrapping (packaging);
S5. when the H-shaped spool 31 rotates to a certain position, the pneumatic film cutter 41 works to cut off the film materials; the pneumatic film cutter 41 is configured to cut off film materials, and is capable of cutting off the film materials rapidly and tidily;
S6. the sliding block 513 on the film guiding mechanism 5 slides in horizontal and vertical directions to adjust the relative position between the motion mechanism 51 and the H-shaped spool 31; the sliding block 513 moves to drive the connecting rod 54 to move, so as to drive the adsorption assembly 52 and the pressing assembly 53 to move; the adsorption assembly 52 holds the film material by means of negative pressure and conveys the end of the cut film material to the H-shaped spool 31; the pressing assembly 53 moves to the H-shaped spool 31 and presses the film material; the film guiding mechanism 5 can smoothly and efficiently convey the end of the cut film material to the H-shaped spool 31, so as to prepare for subsequent smooth sizing step;
56, the Z-axis direction adjusting hand crank 63 and the X-axis direction adjusting hand crank 64 on the glue rubber strip applying unit 6 are adjusted to enable the glue rubber strip stripping board 66 on the glue rubber strip applying unit 6 to face the end of the cut film material; the material tray 61 conveys the glue rubber strip to the glue rubber strip stripping board 66; the glue rubber strip stripping board 66 pastes the glue rubber strip to the film materials on the H-shaped spool 31 under the action of the glue rubber strip pressing rod 65; the pulling mechanism 67 pulls a glue rubber strip raw material to the recycling winding tray 62; thus, the tire bead wire is successfully wrapped by the film material; and
S7. the other film material is conveyed from the lower part the film cutting mechanism 4 to the external circular surface of the H-shaped spool 31, and steps S4 to S6 are repeated to wrap (package) the tire bead wire by the other film material.

The whole tire bead wire film wrapping method has simple process, high precision and high efficiency; the tire bead wire packaging quality is improved, the wound film materials are firm and are not easy to loosen after wrapping (packaging), and the tire bead wire may be wrapped by two film materials, which do not interfere with each other during the wrapping process; and the working process is rapid and efficient, automatic operation is realized, and manual labour is saved.

## Claims

1. A film wrapping device for wrapping tire bead wire with a film material, comprising a machine frame body (1), wherein the machine frame body (1) is provided with:
a winding unit (2), comprising a first winding shaft (21) and a second winding shaft (22) for respectively winding different film materials to wrap a bead wire in two layers;
an H-shaped spool assembly (3), comprising an H-shaped spool (31) and a drive unit (32) for driving the H-shaped spool (31) to rotate such that the H-shaped wheel (31) winding the bead wire;
a film cutting mechanism (4), configured to cut off a film material directly or indirectly conveyed by the winding unit (2);
a glue rubber strip applying unit (6), configured to paste a glue rubber strip to the film material on the H-shaped spool (31);
**characterized by**
a film guiding mechanism (5), comprising a motion mechanism (51), wherein the motion mechanism (51) is configured to be adapted to reciprocate in a first direction and a second direction; the first direction is a direction close to and away from the H-shaped spool (31), while the second direction is a perpendicular direction; the motion mechanism (51) is provided with an adsorption assembly (52) and a pressing assembly (53); the adsorption assembly (52) is configured to hold the film material by means of negative pressure, and to convey, under the action of the motion mechanism (51), an end of the cut film material to the H-shaped spool (31); the pressing assembly (53) is configured to move to the H-shaped spool (31) under the action of the motion mechanism (51) and press the film material.

2. The film wrapping device for wrapping tire bead wire with a film material according to claim 1, wherein
the motion mechanism (51) comprises a crossed sliding table slide rest (511), which is disposed along the second direction, with the bottom connected to the machine frame body (1); and
a guide rail (512), which is connected to the crossed sliding table slide rest (511), disposed along the first direction, and provided with a sliding block (513).

3. The film wrapping device for wrapping tire bead wire with a film material according to claim 2, wherein
the adsorption assembly (52) and the pressing assembly (53) are connected through a connecting rod (54); the connecting rod (54) is disposed on the guide rail (512) in a sliding manner; and the connecting rod (54) is connected to the sliding block (513).

4. The film wrapping device for wrapping tire bead wire with a film material according to claim 1, wherein
the film cutting mechanism (4) comprises a pneumatic film cutter (41), which is disposed inside the film cutting mechanism (4); and
a film bucket (42), fixed on the upper part of the pneumatic film cutter (41), and comprising two film feeding ports (421), which are respectively matched with the first winding shaft (21) and the second winding shaft (22).

5. The film wrapping device for wrapping tire bead wire with a film material according to claim 1, wherein
the drive unit (32) is provided with a film pressing mechanism (33); the film pressing mechanism (33) is driven by the drive unit (32) to synchronously rotate with the H-shaped spool (31).

6. The film wrapping device for wrapping tire bead wire with a film material according to claim 5, wherein the film pressing mechanism (33) comprises:
a film pressing rod (331), the one end of which is connected to the drive unit (32); and
a pressing head (332), connected to the other end of the film pressing rod (331), and configured to press the film material onto the H-shaped spool (31).

7. The film wrapping device for wrapping tire bead wire with a film material according to claim 1, wherein the glue rubber strip applying unit (6) comprises:
a material tray (61), disposed on one side of the glue rubber strip applying unit (6);
a recycling winding tray (62), disposed at the bottom of the glue rubber strip applying unit (6);
a Z-axis direction adjusting hand crank (63), disposed at the top of the glue rubber strip applying unit (6), and configured to adjust the glue rubber strip applying unit (6) to move close to and away from the H-shaped spool (31) in a vertical direction;
an X-axis direction adjusting hand crank (64), perpendicular to the Z-axis direction adjusting hand crank (63), and configured to adjust the movement of the glue rubber strip applying unit (6) along the axial direction of the H-shaped spool (31);
a glue rubber strip pressing rod (65), disposed on the other side of the glue rubber strip applying unit (6) relative to the material tray (61), and provided with a glue rubber strip stripping board (66) at the bottom, wherein the glue rubber strip stripping board (66) is configured to paste the glue rubber strip to the film material on the H-shaped spool (31) under the action of the glue rubber strip pressing rod (65); and
a pulling mechanism (67), disposed between the glue rubber strip pressing rod (65) and the recycling winding tray (62), and configured to pull a glue rubber strip raw material to the recycling winding tray (62).

8. The film wrapping device for wrapping tire bead wire with a film material according to claim 1, wherein
the machine frame body (1) is provided with at least one deviation correction system (7); the deviation correction system (7) comprises a deviation correction sensor (71), which is configured to detect the position of the film material directly or indirectly conveyed by the winding unit (2); and
a deviation correction drive unit (72), which is connected to the deviation correction sensor (71), and configured to drive the film material to move along the width direction of the film material.

9. The film wrapping device for wrapping tire bead wire with a film material according to claim 8, wherein
the machine frame body (1) is provided with two deviation correction systems (7); the two deviation correction systems (7) are respectively matched with the first winding shaft (21) and the second winding shaft (22); the two deviation correction systems (7) are disposed at intervals along the height direction of the machine frame body (1).

10. The film wrapping device for wrapping tire bead wire with a film material according to claim 8, wherein
two film guide roll sets (8) are disposed between the deviation correction system (7) and the winding unit (2); the two film guide roll sets (8) are respectively matched with the first winding shaft (21) and the second winding shaft (22); the two film guide roll sets (8) are disposed at intervals along the height direction of the machine frame body (1).

11. The film wrapping device for wrapping tire bead wire with a film material according to claim 10, wherein
each deviation correction system (7) is connected with a film feeding roll set (9); the film feeding roll sets (9) are disposed at intervals along the height direction of the machine frame body (1); the film feeding roll sets (9) are configured to convey the film material sent by the deviation correction systems (7) to the film cutting mechanism (4).

12. The film wrapping device for wrapping tire bead wire with a film material according to claim 1, wherein
the winding unit (2) is disposed at one end of the machine frame body (1), and the first winding shaft (21) and the second winding shaft (22) are disposed side by side at intervals;
the glue rubber strip applying unit (6) is disposed at the other end of the machine frame body (1) relative to the winding unit (2);
the H-shaped spool assembly (3) is disposed under the glue rubber strip applying unit (6);
the film cutting mechanism (4) is disposed obliquely below the winding unit (2) and close to the H-shaped spool assembly (3); and
the top of the film guiding mechanism (5) is connected to the film cutting mechanism (4) and the bottom of the film guiding mechanism (5) is connected to the bottom of the machine frame body (1), and the top of the motion mechanism (51) is connected to the film cutting mechanism (4).

13. A film wrapping method for tire bead wire, wherein tire bead wire is wrapped with a film material using the film wrapping device according to claim 1.

## Patentansprüche

1. Eine Folieneinwickelvorrichtung zum Einwickeln von Reifenwulstdraht mit einem Folienmaterial, umfassend einen Maschinenrahmenkörper (1), wobei der Maschinenrahmenkörper (1) versehen ist mit:
einer Wickeleinheit (2), umfassend eine erste Wickelwelle (21) und eine zweite Wickelwelle (22) zum jeweiligen Wickeln unterschiedlicher Folienmaterialien, um einen Wulstdraht in zwei Lagen einzuwickeln;
einer H-förmigen Spulenanordnung (3) umfassend eine H-förmige Spule (31) und eine Antriebseinheit (32), um die H-förmige Spule (31) so anzutreiben, dass sie sich dreht, so dass das H-förmige Rad (31) den Wulstdraht aufwickelt;
einen Folienschneidemechanismus (4), der dazu eingerichtet ist, ein von der Wickeleinheit (2) direkt oder indirekt gefördertes Folienmaterial abzuschneiden;
eine Einheit (6) zum Aufbringen eines Klebegummistreifens, die dazu eingerichtet ist, einen Klebegummistreifen auf das Folienmaterial auf der H-förmigen Spule (31) zu kleben;
**gekennzeichnet durch**
einen Folienführungsmechanismus (5), der einen Bewegungsmechanismus (51) umfasst, wobei der Bewegungsmechanismus (51) so eingerichtet ist, dass er sich in einer ersten Richtung und einer zweiten Richtung hin- und herbewegen kann; wobei die erste Richtung eine Richtung nahe der H-förmigen Spule (31) und von dieser weg ist, während die zweite Richtung eine dazu rechtwinklige Richtung ist; wobei der Bewegungsmechanismus (51) mit einer Adsorptionsanordnung (52) und einer Pressanordnung (53) versehen ist; die Adsorptionsanordnung (52) ist dazu eingerichtet, das Folienmaterial mittels Unterdruck zu halten und unter der Wirkung des Bewegungsmechanismus (51) ein Ende des geschnittenen Folienmaterials zu der H-förmigen Spule (31) zu befördern; die Pressanordnung (53) ist dazu eingerichtet, sich unter der Wirkung des Bewegungsmechanismus (51) zu der H-förmigen Spule (31) zu bewegen und das Folienmaterial zu pressen.

2. Die Folieneinwickelvorrichtung zum Einwickeln von Reifenwulstdraht mit einem Folienmaterial gemäß Anspruch 1, wobei
der Bewegungsmechanismus (51) einen gekreuzten Schiebetischkreuzschlitten (511) umfasst, der entlang der zweiten Richtung angeordnet ist, wobei der Boden mit dem Maschinenrahmenkörper (1) verbunden ist; und
eine Führungsschiene (512), die mit dem gekreuzten Schiebetischkreuzschlitten (511) verbunden ist, entlang der ersten Richtung angeordnet ist und mit einem Gleitblock (513) versehen ist.

3. Die Folieneinwickelvorrichtung zum Einwickeln von Reifenwulstdraht mit einem Folienmaterial gemäß Anspruch 2, wobei
die Adsorptionsanordnung (52) und die Pressanordnung (53) über eine Verbindungsstange (54) verbunden sind; die Verbindungsstange (54) gleitend auf der Führungsschiene (512) angeordnet ist; und die Verbindungsstange (54) mit dem Gleitblock (513) verbunden ist.

4. Die Folieneinwickelvorrichtung zum Einwickeln von Reifenwulstdraht mit einem Folienmaterial gemäß Anspruch 1, wobei
der Folienschneidemechanismus (4) einen pneumatischen Folienschneider (41) umfasst, der innerhalb des Folienschneidemechanismus (4) angeordnet ist; und
einen Folientopf (42), der am oberen Teil des pneumatischen Folienschneiders (41) befestigt ist und zwei Folienzuführungsöffnungen (421) umfasst, die jeweils an die erste Wickelwelle (21) und die zweite Wickelwelle (22) angepasst sind.

5. Die Folieneinwickelvorrichtung zum Einwickeln von Reifenwulstdraht mit einem Folienmaterial gemäß Anspruch 1, wobei
die Antriebseinheit (32) mit einem Folienpressmechanismus (33) versehen ist; wobei der Folienpressmechanismus (33) von der Antriebseinheit (32) angetrieben wird, um sich synchron mit der H-förmigen Spule (31) zu drehen.

6. Die Folieneinwickelvorrichtung zum Einwickeln von Reifenwulstdraht mit einem Folienmaterial gemäß Anspruch 5, wobei der Folienpressmechanismus (33) umfasst:
eine Folienpressstange (331), deren eines Ende mit der Antriebseinheit (32) verbunden ist; und
einen Presskopf (332), der mit dem anderen Ende der Folienpressstange (331) verbunden und dazu eingerichtet ist, das Folienmaterial auf die H-förmige Spule (31) zu pressen.

7. Die Folieneinwickelvorrichtung zum Einwickeln von Reifenwulstdraht mit einem Folienmaterial gemäß Anspruch 1, wobei die Einheit (6) zum Aufbringen des Klebegummistreifens Folgendes umfasst:
eine Materialschale (61), die an einer Seite der Einheit (6) zum Aufbringen des Klebegummistreifens angeordnet ist;
eine Recycling-Wickelschale (62), die an der Unterseite der Einheit (6) zum Aufbringen des Klebegummistreifens angeordnet ist;
eine Handkurbel (63) zum Einstellen der Z-Achsenrichtung, die an der Oberseite der Einheit (6) zum Aufbringen des Klebegummistreifens angeordnet ist und dazu eingerichtet ist, die Einheit (6) zum Aufbringen des Klebegummistreifens so einzustellen, dass sie sich in vertikaler Richtung nahe an die H-förmige Spule (31) heran und von ihr weg bewegt;
eine Handkurbel (64) zum Einstellen der X-Achsenrichtung, senkrecht zur Handkurbel (63) zum Einstellen der Z-Achsenrichtung und dazu eingerichtet, die Bewegung der Einheit (6) zum Aufbringen des Klebegummistreifens entlang der axialen Richtung der H-förmigen Spule (31) einzustellen;
eine Klebegummistreifen-Anpressstange (65), die auf der anderen Seite der Einheit (6) zum Aufbringen des Klebegummistreifens in Bezug zu der Materialschale (61) angeordnet ist und mit einem Klebegummistreifen-Ausbrechbrett (66) an der Unterseite versehen ist, wobei das Klebegummistreifen-Ausbrechbrett (66) dazu eingerichtet ist, den Klebegummistreifen unter der Wirkung der Klebegummistreifen-Anpressstange (65) an das Folienmaterial auf der H-förmigen Spule (31) zu kleben;
und einen Zugmechanismus (67), der zwischen der Klebegummistreifen-Anpressstange (65) und der Recycling-Wickelschale (62) angeordnet und dazu eingerichtet ist, ein Klebegummistreifen-Rohmaterial zu der Recycling-Wickelschale (62) zu ziehen.

8. Die Folieneinwickelvorrichtung zum Einwickeln von Reifenwulstdraht mit einem Folienmaterial gemäß Anspruch 1, wobei
der Maschinenrahmenkörper (1) mit mindestens einem Abweichungskorrektursystem (7) versehen ist; das Abweichungskorrektursystem (7) umfasst einen Abweichungskorrektursensor (71), der dazu eingerichtet ist, die Position des von der Wickeleinheit (2) direkt oder indirekt geförderten Folienmaterials zu detektieren; und
eine Abweichungskorrektur-Antriebseinheit (72), die mit dem Abweichungskorrektursensor (71) verbunden und dazu eingerichtet ist, das Folienmaterial anzutreiben, um es entlang der Breitenrichtung des Folienmaterials zu bewegen.

9. Die Folieneinwickelvorrichtung zum Einwickeln von Reifenwulstdraht mit einem Folienmaterial gemäß Anspruch 8, wobei
der Maschinenrahmenkörper (1) mit zwei Abweichungskorrektursystemen (7) versehen ist; die beiden Abweichungskorrektursysteme (7) jeweils an die erste Wickelwelle (21) und die zweite Wickelwelle (22) angepasst sind; die beiden Abweichungskorrektursysteme (7) in Abständen entlang der Höhenrichtung des Maschinenrahmenkörpers (1) angeordnet sind.

10. Die Folieneinwickelvorrichtung zum Einwickeln von Reifenwulstdraht mit einem Folienmaterial gemäß Anspruch 8, wobei
zwei Folienführungsrollensätze (8) zwischen dem Abweichungskorrektursystem (7) und der Wickeleinheit (2) angeordnet sind; die beiden Folienführungsrollensätze (8) jeweils an die erste Wickelwelle (21) und die zweite Wickelwelle (22) angepasst sind; die beiden Folienführungsrollensätze (8) in Abständen entlang der Höhenrichtung des Maschinenrahmenkörpers (1) angeordnet sind.

11. Die Folieneinwickelvorrichtung zum Einwickeln von Reifenwulstdraht mit einem Folienmaterial gemäß Anspruch 10, wobei
jedes Abweichungskorrektursystem (7) mit einem Folienzuführungsrollensatz (9) verbunden ist; die Folienzuführungsrollensätze (9) in Abständen entlang der Höhenrichtung des Maschinenrahmenkörpers (1) angeordnet sind; die Folienzuführungsrollensätze (9) dazu eingerichtet sind, das von den Abweichungskorrektursystemen (7) gesendete Folienmaterial zu dem Folienschneidemechanismus (4) zu fördern.

12. Die Folieneinwickelvorrichtung zum Einwickeln von Reifenwulstdraht mit einem Folienmaterial gemäß Anspruch 1, wobei
die Wickeleinheit (2) an einem Ende des Maschinenrahmenkörpers (1) angeordnet ist, und die erste Wickelwelle (21) und die zweite Wickelwelle (22) in Abständen nebeneinander angeordnet sind;
die Einheit (6) zum Aufbringen eines Klebegummistreifens am anderen Ende des Maschinenrahmenkörpers (1) in Bezug zur Wickeleinheit (2) angeordnet ist;
die H-förmige Spulenanordnung (3) unter der Einheit zum Aufbringen eines Klebegummistreifens (6) angeordnet ist;
der Folienschneidemechanismus (4) schräg unterhalb der Wickeleinheit (2) und nahe der H-förmigen Spulenanordnung (3) angeordnet ist; und
die Oberseite des Folienführungsmechanismus (5) mit dem Folienschneidemechanismus (4) verbunden ist und die Unterseite des Folienführungsmechanismus (5) mit der Unterseite des Maschinenrahmenkörpers (1) verbunden ist und die Oberseite des Bewegungsmechanismus (51) mit dem Folienschneidemechanismus (4) verbunden ist.

13. Ein Folieneinwickelverfahren für Reifenwulstdraht, wobei Reifenwulstdraht mit einem Folienmaterial unter Verwendung der Folieneinwickelvorrichtung gemäß Anspruch 1 eingewickelt wird.

## Revendications

1. Dispositif d'enveloppement de film pour envelopper du fil de perle de pneu avec un matériau de film, comprenant un corps de cadre de machine (1), dans lequel le corps de cadre de machine (1) est pourvu de :
une unité d'enroulement (2), comprenant un premier arbre d'enroulement (21) et un deuxième arbre d'enroulement (22) pour enrouler respectivement différents matériaux de film afin d'envelopper un fil de perle en deux couches ;
un assemblage de bobines en forme de H (3), comprenant une bobine en forme de H (31) et une unité d'entraînement (32) pour entraîner la bobine en forme de H (31) à tourner de manière à ce que la roue en forme de H (31) enroule le fil de perle ;
un mécanisme de coupe de film (4), configuré pour couper un film directement ou indirectement transporté par l'unité d'enroulement (2) ;
une unité d'application de bande en caoutchouc de colle (6), configurée pour coller une bande en caoutchouc de colle au matériau de film sur la bobine en forme de H (31) ;
**caractérisé par**
un mécanisme guidant de film (5), comprenant un mécanisme de mouvement (51), dans lequel le mécanisme de mouvement (51) est configuré pour être adapté pour réciproquer dans une première direction et une deuxième direction ; la première direction est une direction proche et éloignée de la bobine en forme de H (31), tandis que la deuxième direction est une direction perpendiculaire ; le mécanisme de mouvement (51) est doté d'un ensemble d'adsorption (52) et d'un ensemble de pressage (53) ; l'ensemble d'adsorption (52) est configuré pour maintenir le matériau de film au moyen d'une pression négative et pour acheminer, sous l'action du mécanisme de mouvement (51), une extrémité du matériau de film coupé à la bobine en forme de H (31) ; l'ensemble de pressage (53) est configuré pour se déplacer à la bobine en forme de H (31) sous l'action du mécanisme de mouvement (51) et presser le film.

2. Dispositif d'enveloppement de film pour envelopper un fil de perle de pneu avec un matériau de film selon la revendication 1, dans lequel
le mécanisme de mouvement (51) comprend un support de coulisse de table coulissante croisée (511), qui est disposée le long de la deuxième direction, avec le fond connecté au corps de cadre de machine (1) ; et
un rail de guidage (512), qui est connecté au support de coulisse de table coulissante croisée (511), disposé le long de la première direction, et fourni d'un bloc coulissant (513).

3. Dispositif d'enveloppement de film pour envelopper du fil de perle de pneu avec un matériau de film selon la revendication 2, dans lequel
l'ensemble d'adsorption (52) et l'ensemble de pressage (53) sont connectés par une tige de connexion (54) ; la tige de connexion (54) est disposée sur le rail de guidage (512) de manière coulissante ; et la tige de connexion (54) est connectée au bloc coulissant (513).

4. Dispositif d'enveloppement de film pour envelopper du fil de perle de pneu avec un matériau de film selon la revendication 1, dans lequel
le mécanisme de coupage de film (4) comprend un coupeur de film pneumatique qui est disposé à l'intérieur du mécanisme de coupage de film (4) ; et
un seau à film (42), fixé sur la partie supérieure du coupeur de film pneumatique (41), et comprenant deux ports alimentation de film (421), qui sont respectivement mis en correspondance avec le premier arbre d'enroulement (21) et le deuxième arbre d'enroulement (22).

5. Dispositif d'enroulement de film pour envelopper du fil de perle de pneu avec un matériau de film selon la revendication 1, dans lequel
l'unité d'entraînement (32) est fournie d'un mécanisme de pressage de film (33) ; le mécanisme de pressage de film (33) est entraîné par l'unité d'entraînement (32) pour tourner de manière synchronisée avec la bobine en forme de H (31).

6. Dispositif d'enveloppement de film pour envelopper du fil de perle de pneu avec un matériau de film selon la revendication 5, dans lequel le mécanisme de pressage de film (33) comprend :
une tige de pressage de film (331), dont une extrémité est connectée à l'unité d'entraînement (32) ; et
une tête de pressage (332), connectée à l'autre extrémité de la tige de pressage de film (331), et configurée pour presser le matériau de film sur la bobine en forme de H (31).

7. Dispositif d'enveloppement de film pour envelopper du fil de perle de pneu avec un matériau de film selon la revendication 1, dans lequel l'unité d'application de bande en caoutchouc de colle (6) comprend :
un bac de matériau (61), disposé sur un côté de l'unité d'application de bande en caoutchouc de colle (6) ;
un bac d'enroulement de recyclage (62), disposé au fond de l'unité d'application de bande en caoutchouc de colle (6) ;
une manivelle à main de réglage de direction d'axe Z (63), disposée au sommet de l'unité d'application de bande en caoutchouc de colle (6), et configurée pour régler l'unité d'application de bande en caoutchouc de colle (6) pour se rapprocher et s'éloigner de la bobine en forme de H (31) dans une direction verticale ;
une manivelle à main de réglage de direction d'axe X (64), perpendiculaire à la manivelle à main de réglage de direction d'axe Z (63), et configurée pour régler le mouvement de l'unité d'application de bande en caoutchouc de colle (6) le long de la direction axiale de la bobine en forme de H (31) ;
une tige de pressage de bande en caoutchouc de colle (65), disposée de l'autre côté de l'unité d'application de bande en caoutchouc de colle (6) par rapport au bac de matériau (61), et dotée d'une planche de décollement de bande en caoutchouc de colle (66) au fond, dans laquelle la planche de décollement de bande en caoutchouc de colle (66) est configurée pour coller la bande en caoutchouc de colle au matériau de film sur la bobine en forme de H (31) sous l'action de la tige de pression de bande en caoutchouc de colle (65) ; et
un mécanisme de traction (67), disposé entre la tige de pressage de bande en caoutchouc de colle (65) et le bac d'enroulement de recyclage et configuré pour tirer une matière première de bande en caoutchouc de colle vers le bac d'enroulement de recyclage (62).

8. Dispositif d'enveloppement de film pour envelopper du fil de perle de pneu avec un matériau de film selon la revendication 1, dans lequel
le corps de cadre de machine (1) est fourni d'au moins un système de correction de déviation (7) ; le système de correction de déviation (7) comprend un capteur de correction de déviation (71), qui est configuré pour détecter la position du film directement ou indirectement transporté par l'unité d'enroulement (2) ; et
une unité d'entraînement de correction de déviation (72), connectée au capteur de correction de déviation (71) et configurée pour entraîner le matériau de film à se déplacer le long de la direction de la largeur du matériau de film.

9. Dispositif d'enveloppement de film pour envelopper du fil de perle de pneu avec un matériau de film selon la revendication 8, dans lequel
le corps de cadre de machine (1) est équipé de deux systèmes de correction de déviation (7) ; les deux systèmes de correction de déviation (7) sont respectivement adaptés au premier arbre d'enroulement (21) et au deuxième arbre d'enroulement (22) ; les deux systèmes de correction de la déviation (7) sont disposés à intervalles le long de la direction de la hauteur du corps de la machine (1).

10. Dispositif d'enveloppement de film pour envelopper du fil de perle de pneu avec un matériau de film selon la revendication 8, dans lequel
deux ensembles de rouleaux de guidage de film (8) sont disposés entre le système de correction de déviation (7) et l'unité d'enroulement (2) ; les deux ensembles de rouleaux de guidage de film (8) sont respectivement mis en correspondance avec le premier arbre d'enroulement (21) et le deuxième arbre d'enroulement (22) ; les deux ensembles de rouleaux de guidage de film (8) sont disposés à intervalles le long de la direction de la hauteur du corps de cadre de machine (1).

11. Dispositif d'enveloppement de film pour envelopper du fil de perle de pneu avec un matériau de film selon la revendication 10, dans lequel
chaque système de correction de déviation (7) est connecté à un ensemble de rouleaux d'alimentation de film (9) ; les ensembles de rouleaux d'alimentation de film (9) sont disposés à intervalles le long de la direction de la hauteur du corps de cadre de machine (1) ; les ensembles de rouleaux d'alimentation de film (9) sont configurés pour transporter le matériau de film envoyé par les systèmes de correction de déviation (7) au mécanisme de coupage de film (4).

12. Dispositif d'enveloppement de film pour envelopper du fil de perle de pneu avec un matériau de film selon la revendication 1, dans lequel
l'unité d'enroulement (2) est disposée à une extrémité du corps de cadre de machine (1), et le premier arbre d'enroulement (21) et le deuxième arbre d'enroulement (22) sont disposés côte à côte à des intervalles ;
l'unité d'application de bande en caoutchouc de colle (6) est disposée à l'autre extrémité du corps de cadre de machine (1) par rapport à l'unité d'enroulement (2) ;
l'assemblage de bobine en forme de H (3) est disposé sous l'unité d'application de bande en caoutchouc de colle (6) ;
le mécanisme de coupage de film (4) est disposé obliquement sous l'unité d'enroulement (2) et à proximité de l'assemblage de bobine en forme de H (3) ; et
le haut du mécanisme de guidage de film (5) est connecté au mécanisme de coupage de film (4) et le bas du mécanisme de guidage de film (5) est connecté au bas du corps de cadre de machine (1), et le haut du mécanisme de mouvement (51) est connecté au mécanisme de coupage de film (4).

13. Procédé d'enveloppement de film pour fil de perle de pneu, dans lequel du fil de perle de pneu est enveloppé d'un film utilisant le dispositif d'enveloppement de film selon la revendication 1.
